# EUROPÄISCHE PATENTANMELDUNG

(11) **EP 1 585 083 A2**
(43) Veröffentlichungstag der Anmeldung: **12.10.2005**
(21) Anmeldenummer: 05100770.6
(22) Anmeldetag: 04.02.2005
(51) Int. Cl.: G08G 1/16

(54) **Verfahren und Vorrichtung zur Warnung des Fahrers eines Kraftfahrzeuges**

(30) Priorität: 07.04.2004 DE 102004016981
(71) Anmelder: ROBERT BOSCH GMBH, 70442 Stuttgart (DE)
(72) Erfinder: Ahlrichs, Ulrike, 70825 Korntal-Münchingen (DE); Randler, Martin, 70569 Stuttgart (DE); Haffmans, Paco, 71032 Böblingen (DE); Vogler, Axel, 70197 Stuttgart (DE)

(57) **Zusammenfassung**

Es wird ein Verfahren und eine Vorrichtung zur Warnung des Fahrers eines Kraftfahrzeugs (1), dass eine erhöhte Kollisionsgefahr besteht, vorgeschlagen, wobei Umfelderfassungsmittel (2) vorgesehen sind, die den Abstand erkannter Objekte, die Relativgeschwindigkeit bezüglich erkannter Objekte, die Bewegungsrichtung der erkannten Objekte sowie die eigene Fahrzeuggeschwindigkeit ermitteln und die ermittelten Größen einer Auswerteeinrichtung (6) zugeführt werden. Weiterhin ist eine Innenraumsensorik (4) vorgesehen, die die Aufmerksamkeit des Fahrers bezüglich der Verkehrssituation erfasst und Signale, die die Fahreraufmerksamkeit repräsentieren an die Auswerteeinrichtung (6) ausgibt. In Abhängigkeit des ermittelten Kollisionsrisikos und der ermittelten Fahreraufmerksamkeit gibt die Auswerteeinrichtung (6) eine Fahrerwarnung (22) aus.

## Beschreibung

### Verfahren und Vorrichtung zur Warnung des Fahrers eines Kraftfahrzeuges

Die vorliegende Erfindung betrifft ein Verfahren und eine Vorrichtung zur Warnung des Fahrers eines Kraftfahrzeuges, dass eine erhöhte Kollisionsgefahr besteht, wobei Umfelderfassungsmittel vorgesehen sind, die den Abstand erkannter Objekte, die Relativgeschwindigkeit bezüglich erkannter Objekte, die Bewegungsrichtung der erkannten Objekte, sowie die eigene Fahrzeuggeschwindigkeit ermitteln und die ermittelten Größen einer Auswerteeinrichtung zuführen. Weiterhin ist eine Innenraumsensorik vorgesehen, die die Aufmerksamkeit des Fahrers bezüglich der Verkehrssituation erfasst und Signale, die die Fahreraufmerksamkeit repräsentieren, an die Auswerteeinrichtung ausgibt. In Abhängigkeit des ermittelten Kollisionsrisikos und der ermittelten Fahreraufmerksamkeit gibt die Auswerteeinrichtung eine Fahrerwarnung aus.

### Stand der Technik

Aus der Veröffentlichung "Adaptive Cruise Control System, Aspects and Development Trends" von Winner, Witte, Uhler und Lichtenberg, erschienen auf der SAE International Congress & Exposition, 26.-29.02.1996, ist eine Umfeldsensorik für ein Kraftfahrzeug bekannt, die den Abstand, die Relativgeschwindigkeit sowie den Azimutalwinkel erkannter Objekte ermittelt und in deren Abhängigkeit die Fahrzeuggeschwindigkeit bzw. den Zwischenfahrzeugabstand zu einem vorherfahrenden Fahrzeug regelt. Diese Vorrichtung ist als Komfortsystem konzipiert und nimmt dem Fahrer daher keine Verantwortung bezüglich der Fahrzeugführung ab. Demgemäß wird auch nicht berücksichtigt, ob der Fahrer momentan das Fahrgeschehen mit Aufmerksamkeit verfolgt beziehungsweise, ob eine Kollisionsgefahr des eigenen Fahrzeugs mit weiteren Objekten besteht.

Aus der DE 197 34 307 A1 ist ein Verfahren und eine Vorrichtung zur Überwachung und/oder Beeinflussung des Fahrzeugverhaltens eines fahrergesteuerten Kraftfahrzeugs beschrieben, bei denen mittels einer Blickrichtungsbestimmungseinrichtung eine jeweils momentane Blickrichtung des Fahrers des Kraftfahrzeugs bestimmt wird. Die bestimmte Blickrichtung wird dann mit der momentanen Fahrtrichtung des Kraftfahrzeugs verglichen. In Abhängigkeit des Vergleichsergebnisses wird ein Warnsignal und/oder ein Stellsignal generiert, durch das vorzugsweise eine Lenkwinkeländerung erschwert wird.

### Kern und Vorteile der Erfindung

Der Kern der vorliegenden Erfindung ist es, ein Verfahren und eine Vorrichtung anzugeben, die Objekte im Fahrzeugumfeld, vorzugsweise vor dem Fahrzeug befindliche Objekte, erfasst, und aus deren Abstand, Relativgeschwindigkeit und Bewegungsrichtung ein Kollisionsrisiko ermittelt. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise ist zusätzlich eine Fahreraufmerksamkeitssensorik vorgesehen, die die Fahreraufmerksamkeit bezüglich des Umfeldgeschehens registriert und dass im Bedarfsfall die Fahrerwarnung in Abhängigkeit des Kollisionsrisikos und der Fahreraufmerksamkeit ausgegeben wird.

Vorteilhafter Weise wird die Fahrerwarnung durch einen Eingriff in mindestens ein Fahrwerkselement des Kraftfahrzeugs ausgegeben. Hierdurch ist es möglich, dem Fahrer des Kraftfahrzeugs im Warnfall auf haptische bzw. kinästhetische Art und Weise zu signalisieren, dass er seine Aufmerksamkeit wieder auf das Umfeldgeschehen des Fahrzeugs richten soll. Moderne Fahrzeuge sind mit einer Vielzahl an Geräten und Systemen ausgestattet, von denen eine Großzahl Warnungen in Form optischer oder akustischer Signale ausgeben. Durch eine zusätzliche optische oder akustische Warnung des Fahrers im vorliegenden Fall ist es möglich, dass der Fahrer nicht sofort erkennt, durch welches System eine derartige akustische oder optische Warnung ausgelöst wurde. Demgemäß möchte man durch eine haptische oder kinästhetische Signalisierung dem Fahrer intuitiv mitteilen, dass beispielsweise durch ein kurzes Bremsruckeln oder ein Rucken in Folge einer Dämpferverstellung oder Federverstellung der Fahrzeugradaufhängungen, er seine Aufmerksamkeit wieder dem Fahrgeschehen widmen soll. Durch eine derartige haptische oder kinästhetische Signalisierung ist der Fahrer intuitiv in der Lage zu bestimmen, durch welches System diese sicherheitsrelevante Warnung ausgegeben wurde.

Besonders vorteilhaft ist es, dass die Fahrwerkselemente eine elektrisch steuerbare Luftfederung ist. Hierbei kann durch eine kurzzeitige Veränderung des der Federung dienenden Luftdrucks eine Warnung ausgegeben werden.

Weiterhin ist es vorteilhaft, dass die Fahrwerkselemente elektrisch steuerbare Dämpferelemente sind, womit durch eine kurzzeitige Änderung der Dämpfungsparameter der Fahrzeugaufhängung eine kinästhetische bzw. haptische Fahrerwarnung ausgebbar ist, die der Fahrer intuitiv richtig zuordnet.

Weiterhin ist es vorteilhaft, dass die Fahrwerkselemente die Verzögerungseinrichtungen des Fahrzeugs sind. Hierdurch ist es möglich, das Fahrzeug mittels eines kurzzeitigen Bremsrucks nur unwesentlich zu verzögern, wodurch jedoch der Fahrer automatisch seine Aufmerksamkeit dem weiteren Fahrgeschehen zuwendet.

Weiterhin ist es vorteilhaft, dass die Umfelderfassungsmittel ein Radarsensor, ein Lasersensor, ein Ultraschallsensor, ein Videosensor oder eine Kombination hieraus ist.

Weiterhin ist es vorteilhaft, dass die Fahreraufmerksamkeitssensorik ein Videosensor ist. Durch das Vorsehen eines Videosensors als Fahreraufmerksamkeitssensorik ist es möglich, die Blickrichtung des Fahrers bzw. die Kopfhaltung des Fahrers zu analysieren und hieraus zu erkennen, ob der Fahrer seine Aufmerksamkeit auf das Fahrgeschehen richtet oder mit anderen Funktionen, beispielsweise dem Autoradio oder einem Navigationssystem beschäftigt ist.

Weitzerhin ist es möglich, die Fahreraufmerksamkeitssensorik so auszuführen, dass die Fahrerreaktion durch Auswertung beispielsweise des Lenkwinkelsensors, der Schnelligkeit sowie der Intensität einer Bremspedalbetätigung oder weiterer fahrerbetätigbarer Bedienelemenete ermittelt wird. Hierbei kann auch die Reaktionsschnelligkeit, mit der der Fahrer auf eine Situation reagiert, ausgewertet werden oder die Art, durch welche Handlung der Fahrer auf eine Situation reagiert, die Fahreraufmerksamkeit erkannt werden.

Weiterhin ist es vorteilhaft, dass die Fahrerwarnung auch bei Verlassen der Fahrspur ausgegeben wird. Durch die Umfelderfassungsmittel, die beispielsweise als Videosensor vorgesehen sein können, ist es möglich zu erkennen, ob das eigene Fahrzeug die Fahrspurmarkierung überquert und die eigene Fahrspur verlässt, während der Fahrer eventuell seine Aufmerksamkeit nicht auf das Fahrgeschehen richtet. In diesem Fall ist auf ein unbeabsichtigtes Verlassen der Fahrspur zu schließen, wodurch der Fahrer hierüber informiert werden muss, um einem Unfall vorzubeugen.

Von besonderer Bedeutung ist die Realisierung des erfindungsgemäßen Verfahrens in der Form eines Steuerelements, das für ein Steuergerät eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfmdungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read Only Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: eine Skizze eines Fahrzeugs in Draufsicht, das mit der erfindungsgemäßen Vorrichtung ausgestattet ist,
- Figur 2: ein Blockschaltbild einer Ausführungsform der erfindungsgemäßen Vorrichtung und
- Figur 3: ein Ablaufdiagramm einer Ausführungsform des erfindungsgemäßen Verfahrens.

### Beschreibung von Ausführungsbeispielen

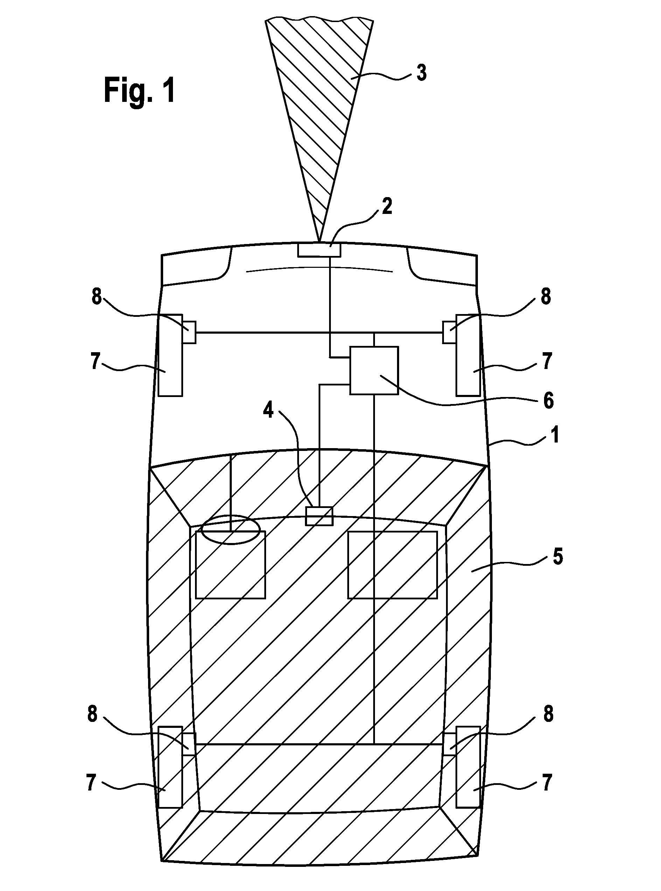

In Figur 1 ist die Draufsicht auf ein skizzenhaft dargestelltes Fahrzeug 1 dargestellt. Dieses Fahrzeug 1 weist unter anderem eine Umfeldsensorik 2 auf, die insbesondere im Frontbereich des Fahrzeugs 1 angeordnet ist. Diese Umfeldsensorik 2 kann beispielsweise als Radarsensor, als Lidarsensor, als Videosensor, als Ultraschallsensor oder als eine Kombination aus diesen Sensorarten ausgeführt sein. Diese Umfeldsensorik ist in der Lage, vorausbefindliche Objekte zu detektieren sowie deren Abstand, Relativgeschwindigkeit und Azimutalwinkel bezüglich des eigenen Fahrzeugs 1 zu bestimmen, sofern sich die Objekte im Erfassungsbereich 3 der Umfeldsensorik aufhalten. Durch eine zeitliche Verfolgung der erkannten Objekte ist es weiterhin möglich, die Bewegungsrichtung der erkannten Objekte bezüglich des eigenen Fahrzeugs 1 zu bestimmen oder, bei Kenntnis der eigenen Fahrzeuggeschwindigkeit ist es sogar möglich, die Absolutbewegungsrichtung des erkannten Objektes zu ermitteln. Die Größen bezüglich Abstand, Relativgeschwindigkeit und Azimutalwinkel der erkannten Objekte werden von der Umfeldsensorik 2 einer Auswerteeinrichtung 6 zugeführt, wobei ein Trackingverfahren, das aus den zeitlich veränderlichen Aufenthaltspositionen der Objekte die Bewegungsrichtung der erkannten Objekte ermitteln kann, diese ermittelt und auswertet, indem beispielsweise eine Kollisionseahrscheinlichkeit mit dem eigenen Fahrzeug ermittelt wird.. Weiterhin weist das Fahrzeug 1 eine Fahreraufmerksamkeitssensorik 4 auf, die vorteilhafter Weise als Videosensor ausgeführt sein kann. Der Fahreraufmerksamkeitssensorik überwacht den Innenraum des Fahrzeugs 1 oder zumindest einen Teil des Insassenraums des Fahrzeugs 1. Im dargestellten Beispiel deckt der Erfassungsbereich der Innenraumsensorik 5 den gesamten Fahrgastraum des Fahrzeugs 1 ab. Es wäre aber im Rahmen der vorliegenden Erfindung auch ausreichend, dass der Innenraumsensor 4 lediglich den Fahrerbereich abdeckt, also den Bereich des Fahrersitzes sowie des Kopfbereichs des Fahrers oder aber die Fahrerreaktion durch Auswertung des Lenkwinkelsensors, des Bremspedalsensors oder anderer fahrerbetätigbarer Bedienelemente. Die Fahreraufmerksamkeitssensorik 4 nimmt bei der Ausführung als Videosensor insbesondere den Kopf des Fahrers auf sowie dessen Augenposition und ermittelt hieraus die Blickrichtung des Fahrers sowie die zeitliche Verharrungszeit des Fahrerblickes in den entsprechenden Blickrichtungen. Hierdurch ist es möglich zu erkennen, ob der Fahrer beispielsweise nur kurzzeitig die Armaturentafel abliest, oder nur kurzzeitig die Radioeinstellungen ändert oder ob er dauerhaft vom Fahrgeschehen abgelenkt ist und demnach über einen längeren Zeitraum den Blick vom Fahrzeugfrontbereich abgewendet hat. Die Fahreraufmerksamkeitssensorik 4 leitet die Ausgangssignale, die die Fahreraufmerksamkeit repräsentieren, an die Auswerteeinrichtung 6 weiter. Aus den von der Umfeldsensorik 2 ermittelten Größen ermittelt die Auswerteeinrichtung 6 ein Kollisionsrisiko, das beispielsweise darstellt, mit welcher Wahrscheinlichkeit oder in welcher Zeit eine Kollision stattfinden kann, sofern der Fahrer zwischenzeitlich nicht aktiv in das Fahrgeschehen eingreift. Überschreitet das Kollisionsrisiko beispielsweise einen vorgegebenen Schwellenwert, so kann eine Fahrerwarnung durch die Auswerteeinrichtung 6 ausgegeben werden. Hierzu kann zusätzlich die Fahreraufmerksamkeit herangezogen werden, so dass beispielsweise in Situationen, in denen ein hohes Kollisionsrisiko besteht, der Fahrer jedoch gleichzeitig mit voller Aufmerksamkeit das Verkehrsgeschehen verfolgt, keine Warnung ausgegeben wird, da man davon ausgehen kann, dass der Fahrer die momentane Verkehrssituation erfasst und dementsprechend das Fahrzeug führt. Entsprechend ist es möglich, bei einem geringeren Kollisionsrisiko eine Fahrerwarnung auszugeben, wenn der Fahrer über einen längeren Zeitraum hinweg nicht das Fahrzeugumfeld erfasst und es daher auch bei Situationen mit geringerer Kollisionswahrscheinlichkeit zu gefährlichen Verkehrssituationen kommen kann, da der Fahrer nicht die vorliegende Situation erkannt hat und auch nicht dementsprechend handeln kann. Wird durch eine Bewertung des des vorliegenden Kollisionsrisikos oder die gemeinsame Bewertung des vorliegenden Kollisionsrisikos und der Fahreraufmerksamkeit eine Warnung ausgegeben, so gibt die Auswerteeinrichtung 6 Ausgangssignale aus, die an Fahrwerkselemente 8 ausgegeben wird. In der Darstellung der Figur 1 sind die Fahrzeugräder 7 dargestellt, die üblicherweise Federelemente, Dämpferelemente, Verzögerungselemente sowie weitere Fahrwerksaufhängungselemente umfassen. Durch die elektrische Ansteuerung mindestens eines Fahrwerkelements, beispielsweise einer elektrisch steuerbaren Luftfederung, einer elektrisch ansteuerbaren Bremse, oder einem elektrisch steuerbaren Dämpferelement ist es möglich, die Fahrgastzelle hierdurch in ihrer Dynamik zu beeinflussen und dem Fahrer auf kinästhetische bzw. haptische Art und Weise eine Warnung auszugeben.

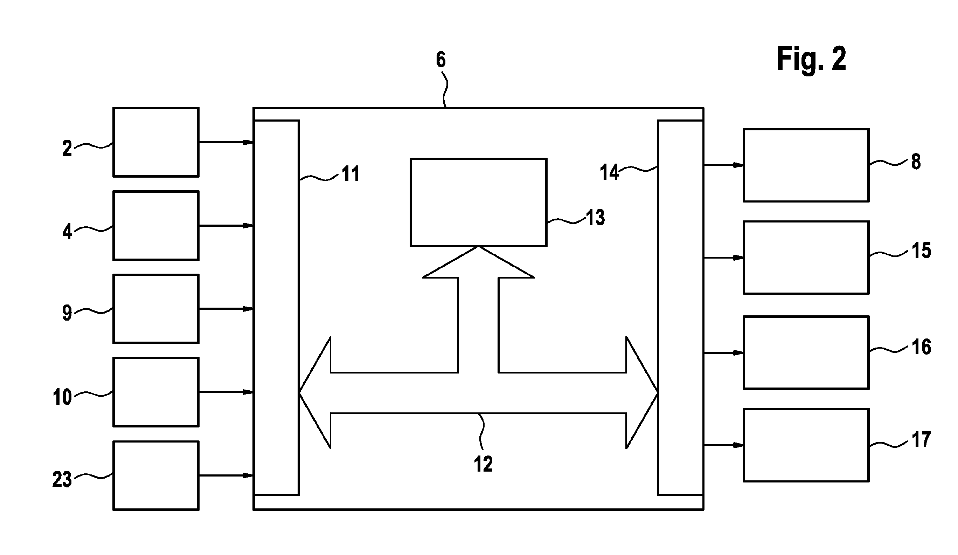

In Figur 2 ist ein schematisches Blockdiagramm einer Ausführungsform der erfindungsgemäßen Vorrichtung dargestellt. Zu erkennen ist die Auswerteeinrichtung 6, die u.a. eine Eingangsschaltung 11 aufweist. Mittels der Eingangsschaltung 11 ist es möglich, der Auswerteeinrichtung 6 Eingangssignale zuzuführen. Als Eingangssignale werden der Eingangsschaltung 11 Signale einer Umfeldsensorik 2 zugeführt, die beispielsweise ein Radar, Laser, Ultraschall oder Videosensor sein kann, wobei vorteilhafter Weise als Eingangsgrößen der Abstand erkannter Objekte, die Relativgeschwindigkeit erkannter Objekte, der Azimutalwinkel der erkannten Objekte bezüglich des eigenen Fahrzeugs 1 und sofern möglich, die Bewegungsrichtung des erkannten Objektes vorgesehen sind. Im Fall, dass als Umfeldsensorik 2 ein Radarsensor vorgesehen ist, der nicht in der Lage ist, die Bewegungsrichtung eines erkannten Objektes zu detektieren ist es möglich, dass in der Berechnungseinrichtung 13 mittels eines Trackingalgorithmusses die Bewegungsrichtung des erkannten Objekts aus dessen zeitlich aufeinanderfolgenden Positionen berechnet wird. Im Fall, dass die Umfeldsensorik einen Videosensor aufweist ist es jedoch auch möglich, dass die Bewegungsrichtung des erkannten Objektes direkt ermittelbar ist. Weiterhin werden der Eingangsschaltung 11 Signale einer Fahreraufmerksamkeitssensorik 4 zugeführt, die beispielsweise die Fahrgastzelle überwacht, jedoch mindestens die Fahrerreaktion erfasst. Die Fahreraufmerksamkeitssensorik, die beispielsweise als Videosensor ausgeführt sein kann, erfasst die Augenposition des Fahrers sowie die Blickrichtung der Augen des Fahrers sowie die Zeitdauern, die der Fahrerblick in den entsprechenden Blickrichtungen verharrt. Weiterhin kann festgestellt werden, ob der Fahrerblick auf die Umfeldsituation des Fahrzeugs 1 gerichtet ist, oder ob der Fahrer seinen Blick in andere Richtungen wendet. Die Fahreraufmerksamkeitssensorik 4 führt der Eingangsschaltung 11 ein Signal zu, das die Fahreraufmerksamkeit repräsentiert, indem Blickrichtung und Blickrichtungsverweildauer analysiert werden. Weiterhin werden der Eingangsschaltung 11 Signale einer Bedieneinrichtung 9 zugeführt, mittels der der Fahrer des Fahrzeugs 1 beispielsweise das erfindungsgemäße System einschalten, ausschalten oder dessen Einstellparameter verändern kann. Weiterhin ist vorgesehen, dass der Eingangsschaltung 11 ein Geschwindigkeitssignal zugeführt wird, das von einem Geschwindigkeitssensor 10 stammt. Das Geschwindigkeitssignal repräsentiert hierbei die Geschwindigkeit des eigenen Fahrzeugs 1 und wird benötigt, um beispielsweise die Relativgeschwindigkeit des eigenen Fahrzeugs, die mittels der Umfeldsensorik 2 ermittelbar ist, in Absolutwerte umzurechnen. Das Geschwindigkeitssignal kann beispielsweise von einem Geschwindigkeitssensor 10, der an einem der Fahrzeugräder montiert ist, zugeführt werden oder kann von weiteren Fahrzeugsystemen, beispielsweise einem Antiblockiersystem oder einer elektronischen Fahrdynamiksteuerung, stammen. Weiterhin der Eingangsschaltung 11 noch die Gierrate eines Gierratensensors 23 zuführbar, so dass die Gierraten und die Eigengeschwindigkeit die Bestimmung der Eigenbewegung ermöglichen. Die der Eingangsschaltung 11 zugeführten Signale werden mittels einer Datenaustauscheinrichtung 12 einer Berechnungseinrichtung 13 zugeführt. Die Berechnungseinrichtung 13 kann beispielsweise als Mikroprozessor oder Signalprozessor ausgeführt sein und ermittelt aus den ihr zugeführten Eingangsgrößen Ausgangswerte, die an nachgeordnete Stellglieder ausgegeben werden. In der Berechnungseinrichtung 13 läuft insbesondere das erfindungsgemäße Verfahren in der Form eines Steuerprogramms ab. Die Berechnungseinrichtung 13 ermittelt aus den objektbezogenen Daten des Umfeldsensors 2 ein Kollisionsrisiko und bewertet dieses evetuell gemeinsam mit dem Fahreraufmerksamkeitssignal, das die Fahreraufmerksamkeitssensorik 4 zur Verfügung stellt, und gibt wahlweise als Ausgangssignal eine Größe zur Ansteuerung der Warneinrichtungen aus. Die von der Berechnungseinrichtung 13 ermittelten Ausgangssignale werden mittels der Datenaustauscheinrichtung 12 einer Ausgangsschaltung 14 zugeführt, die die Ausgangssignale an nachgeordnete Stellelemente ausgibt. Als Stellelemente sind insbesondere Fahrwerkselemente 8 vorgesehen, beispielsweise in Form elektrisch ansteuerbarer variabler Dämpfer, elektrisch steuerbarer Federelemente oder elektrisch steuerbarer Verzögerungseinrichtungen, die in Abhängigkeit der Ausgangssignale der Berechnungseinrichtung 13 einen Ruck, ein Wackeln oder eine andere, dynamische Beeinflussung der Fahrgastzelle hervorrufen, um dem Fahrer die Warnung auf haptische bzw. kinästhetische Weise mitzuteilen. Weiterhin kann zusätzlich eine akustische Warneinrichtung 15 vorgesehen sein, die durch die Ausgangsschaltung 14 ansteuerbar ist und die zusätzlich zu den Fahrwerkselementen 8 aktivierbar ist, um dem Fahrer die Warnung der Auswerteeinrichtung 6 mitzuteilen. Weiterhin kann eine optische Warneinrichtung 16 vorgesehen sein, die ebenfalls von der Ausgangsschaltung 14 ansteuerbar ist und dem Fahrer zusätzlich zu den Fahrwerkselementen 8 die Warnung der Auswerteeinrichtung 6 in optischer Art und Weise, beispielsweise mittels einer Klartextanzeige oder aufleuchtender Kontrollleuchten dem Fahrer die Warnung mitteilt. Weiterhin ist es möglich, mittels der Ausgangsschaltung 14 Insassenrückhaltesysteme 17 anzusteuern, beispielsweise indem stufenweise zündbare Airbags vorgezündet werden oder Gurtstraffer aktiviert werden, um die Fahrzeuginsassen vor der drohenden Kollision in die richtige Sitzposition zu verbringen und eine unausweichbare Kollision, die durch Fahrerunaufmerksamkeit hervorgerufen wurde und das Warnsignal nicht verhindert werden konnte, in ihrer Auswirkung abzumildern. Weiterhin kann es vorgesehen sein, durch eine oszillierende Aktivierung der Gurtstraffer dem Fahrer über den Sicherheitsgurt ein Warnsignal zu vermitteln, indem der Sicherheitsgurt mehrfach hintereinander gestrafft und wieder gelockert wird. In diesem Fall ist es notwendig, dass die Gurtstraffer reversible Straffungseinrichtungen aufweisen.

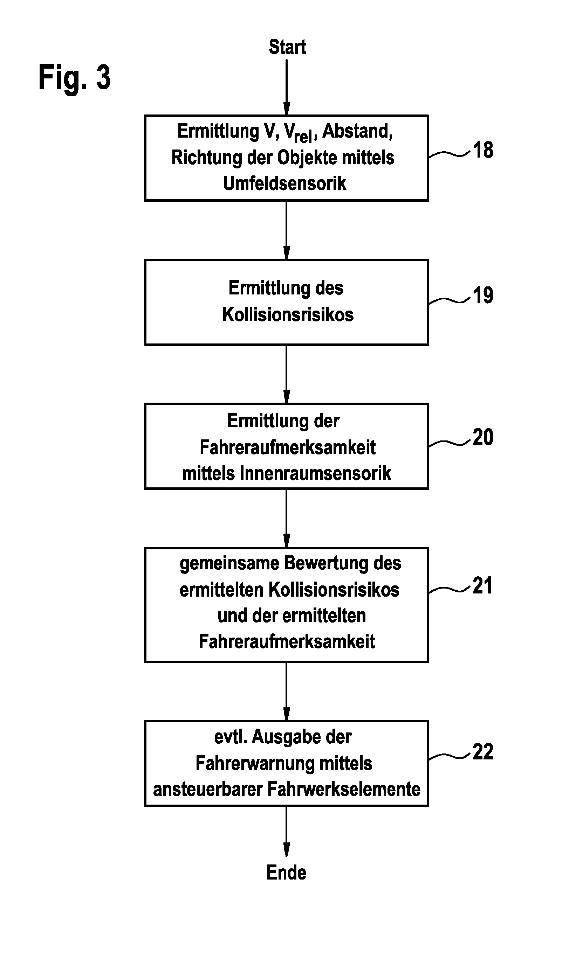

In Figur 3 ist ein Ablaufdiagramm einer Ausführungsform des erfindungsgemäßen Verfahrens dargestellt. Hierzu wird im Verfahrensschritt 18 mittels der Umfeldsensorik 2 die Eigengeschwindigkeit V des Fahrzeugs 1, die Relativgeschwindigkeit Vᵣₑ₁, der Abstand d des erkannten Objekts zum eigenen Fahrzeug 1 sowie die Bewegungsrichtung der erkannten Objekte ermittelt und der Berechnungseinrichtung 13 zugeführt. Je nach dem, welche Sensorarten für die Umfeldsensorik verwendet werden, ist es möglich, dass nicht alle der genannten Größen durch diesen Sensor ermittelbar sind. Beispielsweise bei der Verwendung eines Radarsensors ist es nicht möglich, ohne weiteres die Bewegungsrichtung des Objektes festzustellen. Derartige Größen, die beispielsweise nicht direkt durch die Umfeldsensorik 2 ermittelbar sind, werden in diesem Fall von der Berechnungseinrichtung 13 ermittelt, indem beispielsweise mittels des Radarsensors der Azimutwinkel des erkannten Objekts sowie der Abstand des erkannten Objekts zu mehreren Zeitpunkten gespeichert werden und durch die zeitliche Änderung des Abstands und des Azimutwinkels sowie der Relativgeschwindigkeit dem erkannten Objekt dennoch eine Bewegungsrichtung zugeordnet werden kann. Im darauffolgenden Verfahrensschritt 19 wird in der Berechnungseinrichtung 13 aus den ihr zugeführten Eingangssignalen ein Kollisionsrisiko ermittelt. Dieses Kollisionsrisiko kann beispielsweise eine Wahrscheinlichkeit sein, mit der eine Kollision mit erkannten Objekten stattfindet, falls der Fahrer vorher nicht tätig wird und in das Fahrgeschehen eingreift. Beispielsweise ist es auch möglich, hierzu eine verbleibende Zeit bis zu einer berechneten Kollision vorauszubestimmen und in Abhängigkeit dieser verbleibenden Zeit ein Kollisionsrisiko festzusetzen. Im nächsten Verfahrensschritt 20 wird mittels der Innenraumsensorik 4 die Fahreraufmerksamkeit ermittelt, die beispielsweise als Wert zwischen 0 und 1 angesetzt werden kann. Zur Ermittlung des Fahreraufmerksamkeitswertes wird insbesondere die Blickrichtung des Fahrers ausgewertet, sowie die Verweildauer des Fahrerblicks in die jeweiligen Blickrichtungen. Dabei führt ein langanhaltender Fahrerblick auf das Fahrgeschehen vor dem Fahrzeug zu einer Erhöhung des Fahreraufmerksamkeitswertes sowie ein langanhaltender Blick in andere Richtungen, beispielsweise in Richtung Mittelkonsole des Fahrzeugs, zu einer Verringerung des Fahreraufmerksamkeitswertes. Kurze Fahrerblicke in andere Richtungen als auf das Fahrgeschehen reduzieren zwar den Fahreraufmerksamkeitswert, jedoch wird ein kurzer Blick nicht so stark bewertet wie ein langanhaltender Blick. Der Fahreraufmerksamkeitswert kann wieder ansteigen, sobald der Fahrer seinen Blick auf das Fahrgeschehen richtet. Im darauffolgenden Verfahrensschritt 21 wird das in Schritt 19 ermittelte Kollisionsrisiko sowie der in Schritt 20 ermittelte Fahreraufmerksamkeitswert gemeinsam bewertet. Dies kann dazu führen, dass in einer gefährlichen Verkehrssituation, in der das ermittelte Kollisionsrisiko hoch ist, keine Warnung ausgegeben werden soll, da der Fahrer über einen längeren Zeitraum aufmerksam das Fahrzeugumfeld verfolgt. Bei Verkehrssituationen mit geringerem Kollisionsrisiko kann der Fahrer auch für längere Zeit den Blick vom Verkehrsgeschehen abwenden, ohne dass dieses in einer Fahrerwarnung resultiert, da sich der Fahreraufmerksamkeitswert noch immer in Relation zum Kollisionsrisiko der momentanen Verkehrssituation adäquat verhält. Es ist also bei Verkehrssituationen mit erhöhtem Kollisionsrisiko nötig, dass der Fahrer dem Fahrgeschehen eine größere Fahreraufmerksamkeit widmet und der Fahrer bei Verkehrssituationen mit geringerem Kollisionsrisiko dementsprechend auch eine geringere Fahreraufmerksamkeit dem Verkehrsgeschehen zuwenden muss. Sollte das Kollisionsrisiko zu groß werden oder die Fahreraufmerksamkeit in Bezug auf das Kollisionsrisiko zu gering werden, so wird in Schritt 22 eine Fahrerwarnung ausgegeben, indem Fahrwerkselemente 8 angesteuert werden. Das Verfahren kann erfindungsgemäß auch als Endlosschleife durchlaufen werden, so dass bei Erreichen des Verfahrensschritts ENDE dieses wieder automatisch beim Verfahrensschritt START neu beginnt. Im Fall, dass die Umfeldsensorik unter anderem über einen Videosensor verfügt, ist es auch möglich, mittels dieses Videosensors die Fahrspurmarkierungen zu erfassen und ein unbeabsichtigtes Verlassen der Fahrspur durch das Fahrzeug zu erkennen. Möchte der Fahrer beispielsweise auf einer mehrspurigen Straße die Fahrbahn wechseln, so wendet er hierfür eine erhöhte Fahreraufmerksamkeit auf. Im Falle dieser erhöhten Fahreraufmerksamkeit ist es nun möglich, auch ohne Fahrerwarnung die Spur zu verlassen, da der Fahrer die Verkehrssituation vollständig erfasst. Im Fall, dass das Fahrzeug die Fahrspurmarkierung überfährt und der Fahrer gleichzeitig bezüglich des Verkehrsgeschehens unachtsam ist, kann daraus geschlossen werden, dass der Fahrer die Fahrspur nicht verlassen möchte, weshalb der Fahrer in dieser Situation durch Ansteuerung der Fahrwerkselemente gewarnt wird, um einen Unfall zu vermeiden.

## Patentansprüche

1. Vorrichtung zur Warnung des Fahrers eines Kraftfahrzeugs (1), dass eine erhöhte Kollisionsgefahr besteht, **dadurch gekennzeichnet, dass** Umfelderfassungsmittel (2) vorgesehen sind, die den Abstand erkannter Objekte, die Relativgeschwindigkeit bezüglich erkannter Objekte, die Bewegungsrichtung der erkannten Objekte sowie die eigene Fahrzeuggeschwindigkeit (10) ermitteln, dass die ermittelten Größen einer Auswerteeinrichtung (6) zugeführt werden, und dass die Auswerteeinrichtung (6) in Abhängigkeit eines ermittelten Kollisionsrisikos eine Fahrerwarnung ausgibt.

2. Vorrichtung nach Anspruch 1, **dadurch gekennzeichnet, dass** eine Fahreraufmerksamkeitssensorik (4) vorgesehen ist, die die Aufmerksamkeit des Fahrers bezüglich der Verkehrssituation erfasst und Signale, die die Fahreraufmerksamkeit repräsentieren an die Auswerteeinrichtung (6) ausgibt dass die Fahrerwarnung in Abhängigkeit der ermittelten Fahreraufmerksamkeit ausgegeben wird.

3. Vorrichtung nach Anspruch 1 oder 2, **dadurch gekennzeichnet, dass** die Fahrerwarnung durch einen Eingriff in mindestens ein Fahrwerkselement (8) des Kraftfahrzeugs (1) ausgegeben wird.

4. Vorrichtung nach einem der vorhergehenden Ansprüche, **dadurch gekennzeichnet, dass** die Fahrwerkselemente (8) eine elektrisch steuerbare Luftfederung ist.

5. Vorrichtung nach einem der vorhergehenden Ansprüche, **dadurch gekennzeichnet, dass** die Fahrwerkselemente (8) elektrisch steuerbare Dämpferelemente sind.

6. Vorrichtung nach einem der vorhergehenden Ansprüche, **dadurch gekennzeichnet, dass** die Fahrwerkselemente (8) die Verzögerungseinrichtungen des Fahrzeugs (1) sind.

7. Vorrichtung nach einem der vorhergehenden Ansprüche, **dadurch gekennzeichnet, dass** die Umfelderfassungsmittel (2) ein Radarsensor, ein Lasersensor, ein Ultraschallsensor, ein Videosensor oder eine Kombination hieraus ist.

8. Vorrichtung nach einem der vorhergehenden Ansprüche, **dadurch gekennzeichnet, dass** die Fahreraufmerksamkeitssensorik (4) ein Videosensor und/oder eine Einrichtung zur Überwachung der Schnelligkeit und/oder der Stärke der Fahrerreaktion ist.

9. Vorrichtung nach einem der vorhergehenden Ansprüche, **dadurch gekennzeichnet, dass** die Fahrerwarnung auch bei Verlassen der Fahrspur ausgegeben wird.

10. Verfahren zur Warnung des Fahrers eines Kraftfahrzeugs, dass eine erhöhte Kollisionsgefahr besteht, **dadurch gekennzeichnet, dass** Umfelderfassungsmittel (2) einer Auswerteeinrichtung (6) Messwerte bezüglich dem Abstand erkannter Objekte, der Relativgeschwindigkeit bezüglich erkannter Objekte, die Bewegungsrichtung der erkannten Objekte sowie der eigene Fahrzeuggeschwindigkeit zuführen (18), dass die Auswerteeinrichtung (6) hieraus ein Kollisionsrisiko ermittelt (19), dass in Abhängigkeit des ermittelten Kollisionsrisikos eine Fahrerwarnung ausgebbar (22) ist.

11. Verfahren nach Anspruch 10, **dadurch gekennzeichnet, dass** eine Fahreraufmerksamkeitssensorik (4) der Auswerteeinrichtung (6) Größen zuführt, die die Aufmerksamkeit des Fahrers bezüglich der Verkehrssituation repräsentiert (20) und die Fahrerwarnung in Abhängigkeit der ermittelten Fahreraufmerksamkeit (21) ausgebbar ist.
